# DEMANDE DE BREVET EUROPEEN

(11) **EP 1 256 737 A1**
(43) Date de publication de la demande: **13.11.2002**
(21) Numéro de dépôt: 02291128.3
(22) Date de dépôt: 06.05.2002
(51) Int. Cl.: F16D 23/14

(54) **Dispositif de butée de débrayage et procédé d'assemblage**

(30) Priorité: 11.05.2001 FR 0106272
(71) Demandeur: Aktiebolaget SKF, S-415 50 Göteborg (SE)
(72) Inventeur: Arnault, Benoit, 37540 Saint Cyr sur Loire (FR); Girardin, Hervé, 37300 Joue-les-Tours (FR)
(74) Mandataire: Casalonga, Axel

(57) **Abrégé**

Le dispositif de butée de débrayage, selon un aspect de l'invention, comprend un élément de manoeuvre 2 pourvu d'une partie avant 6 munie d'un roulement formant butée 10 du type apte à coopérer avec un diaphragme d'embrayage et d'une partie arrière du type apte à coopérer avec un organe de commande 58 comprenant deux surfaces d'appui 64, 65 radialement espacées de part et d'autre d'un axe central de l'élément de manoeuvre 2. Une portion radiale 28 s'étendant vers l'extérieur à partir de l'extrémité arrière de la portion axiale 26 présente deux échancrures 29a, 29b symétriques aptes à permettre le rapprochement axial des surfaces d'appui 64, 65 de l'organe de commande 58 vers des surfaces radiales de commande 27a, 27b de l'élément de manoeuvre 2. Un moyen d'encliquetage est apte à interdire un déplacement axial inverse.

## Description

La présente invention concerne un dispositif de butée de débrayage et un procédé d'assemblage associé.

La présente invention concerne plus particulièrement les dispositifs de butée de débrayage qui comportent un élément de manoeuvre monté coulissant dans un carter. L'élément de manoeuvre comprend une partie avant sur laquelle est monté un roulement capable de venir appuyer sur un diaphragme pour manoeuvrer des disques de friction d'un embrayage, et une partie arrière. Un organe de commande, par . exemple sous la forme d'une fourchette, est capable de venir en appui sur une partie arrière de l'élément de manoeuvre, de façon qu'il déplace axialement l'élément de manoeuvre dans le carter.

Lors de l'assemblage du dispositif de butée de débrayage, l'élément de manoeuvre est introduit axialement dans une douille du carter, l'organe de commande est alors introduit sensiblement radialement dans une ouverture du côté de la douille axialement opposé au diaphragme de façon que deux doigts de l'organe de commande viennent de part et d'autre d'une portion axiale de l'élément de manoeuvre, comprenant deux surfaces axiales. La liaison réalisée entre les doigts de la fourchette de commande et les surfaces axiales de la portion axiale de l'élément de manoeuvre permet de solidariser angulairement l'élément de manoeuvre et la fourchette de commande.

Comme on introduit l'élément de manoeuvre dans une extrémité d'une douille du carter, et que la fourchette de commande est introduite vers l'autre extrémité axiale de la douille du carter, l'assemblage de l'élément de manoeuvre et de la douille s'effectue en aveugle.

On connaît par le document FR -A- 2 787 849, un dispositif de butée de débrayage, comprenant sur sa partie avant visible depuis l'extérieur du carter lors de l'introduction de l'élément de manoeuvre dans la douille du carter, des éléments de marquage permettant de repérer la position angulaire et la position axiale de l'élément de manoeuvre dans la douille du carter, afin de pouvoir atteler l'organe de commande sur la partie arrière de l'élément de manoeuvre en aveugle, jusqu'à la fixation de l'organe de commande sur une liaison avec le carter.

L'assemblage de la butée d'embrayage en aveugle, grâce à des éléments de marquage, nécessite de prêter attention à la position angulaire et axiale de l'élément de manoeuvre dans la douille du carter.

L'invention propose un dispositif de butée de débrayage permettant un montage facile de l'élément de manoeuvre et de l'organe de commande.

L'invention propose encore un dispositif de débrayage permettant de monter dans un premier temps l'organe de commande dans sa position de fonctionnement, puis ensuite de monter l'élément de manoeuvre.

L'invention propose enfin un dispositif de débrayage comprenant un moyen de positionnement angulaire de l'élément de manoeuvre par rapport à l'organe de commande, pouvant être obtenu à faible coût, et permettant de solidariser axialement l'élément de manoeuvre et l'organe de commande.

Le dispositif de butée de débrayage, selon un aspect de l'invention, comprend un élément de manoeuvre pourvu d'une partie avant munie d'un roulement formant butée du type apte à coopérer avec un diaphragme d'embrayage et d'une partie arrière du type apte à coopérer avec un organe de commande comprenant deux surfaces d'appui radialement espacées de part et d'autre d'un axe central de l'élément de manoeuvre, la partie arrière de l'élément de manoeuvre comprenant deux surfaces radiales de commande prévues pour être en contact avec lesdites deux surfaces d'appui. Une portion axiale de l'élément de manoeuvre s'étend axialement à l'opposé de la partie avant au-delà desdites deux surfaces radiales et radialement entre lesdites deux surfaces radiales de commande, la portion axiale comprenant deux surfaces axiales symétriques par rapport à l'axe central et prévues pour coopérer avec l'organe de commande en solidarisant angulairement l'élément de manoeuvre et l'organe de commande. Une portion radiale arrière s'étendant vers l'extérieur à partir de l'extrémité arrière de la portion axiale présente deux échancrures symétriques aptes à permettre le rapprochement axial des surfaces d'appui de l'organe de commande et des surfaces radiales de commande de l'élément de manoeuvre. La portion axiale comprend un moyen d'encliquetage apte à interdire un déplacement axial inverse.

Ainsi, lors de l'assemblage du dispositif de butée de débrayage, le mouvement axial de l'élément de manoeuvre peut permettre d'amener les surfaces d'appui de l'organe de commande en contact avec lesdites surfaces radiales de commande de la partie arrière de l'élément de manoeuvre, le moyen d'encliquetage interdit le déplacement axial en sens inverse des surfaces d'appui de l'organe de commande, une fois que les surfaces d'appui de l'organe de commande sont venues en contact avec les surfaces radiales de commande de la partie arrière de l'élément de manoeuvre.

Avantageusement, les surfaces radiales de commande de l'élément de manoeuvre sont prévues pour un contact permanent entre l'organe de commande et l'élément de manoeuvre, la portion radiale arrière étant prévue pour un contact provisoire avec les surfaces d'appui de l'organe de manoeuvre lors de l'assemblage de l'organe de commande et de l'élément de manoeuvre. Ainsi, lors de l'assemblage du dispositif de butée de débrayage, on déplace axialement l'élément de manoeuvre en direction de l'organe de commande. Si l'élément de manoeuvre n'est pas orienté angulairement correctement vis-à-vis de l'organe de commande, les surfaces d'appui de l'organe de commande viendront en contact provisoire avec une surface radiale arrière de la portion radiale arrière de l'élément de manoeuvre. Si l'élément de manoeuvre est orienté angulairement correctement par rapport à l'organe de commande, les surfaces d'appui pourront se déplacer axialement dans les échancrures symétriques de la portion radiale arrière de l'élément de manoeuvre, relativement à l'élément de manoeuvre, et venir en contact avec les deux surfaces radiales de commande de la partie arrière de l'élément de manoeuvre. Lorsque les surfaces d'appui de l'organe de commande sont en contact avec la surface radiale arrière de la portion radiale arrière, la rotation de l'élément de manoeuvre permet d'amener les surfaces d'appui de l'organe de commande en regard des échancrures de la portion radiale arrière de l'élément de manoeuvre, pour permettre le rapprochement axial desdites surfaces d'appui de l'organe de commande et des surfaces radiales de commande de la partie arrière de l'élément de manoeuvre.

Dans un mode de réalisation, le moyen d'encliquetage comprend un organe de retenue faisant saillie à partir d'une surface axiale de la portion axiale, radialement vers l'extérieur, axialement en direction des surfaces radiales de commande de la partie arrière de l'élément de manoeuvre. Ainsi, lors du rapprochement des surfaces d'appui de l'organe de commande et des surfaces radiales de commande de l'élément de manoeuvre, la déformation élastique de l'organe de retenue du moyen d'encliquetage, qui se replie radialement vers la portion axiale, permet le déplacement axial relativement à l'élément de manoeuvre des surfaces d'appui de l'organe de commande en direction des surfaces radiales de commande de la partie arrière de l'élément de manoeuvre, tout en interdisant un déplacement axial inverse.

Avantageusement, l'organe de retenue est une agrafe fixée sur la portion axiale.

Avantageusement, le moyen d'encliquetage est monobloc avec la portion axiale. Ainsi, le moyen d'encliquetage peut être obtenu lors de la même opération de fabrication qui permet d'obtenir la portion axiale.

De préférence, le moyen d'encliquetage se situe axialement entre les surfaces radiales de commande et la surface radiale arrière, de façon à permettre la rotation de l'élément de manoeuvre lorsque les surfaces d'appui de l'organe de commande sont en contact avec une surface radiale arrière de la portion radiale arrière.

L'invention concerne également un procédé d'assemblage d'une butée de débrayage, comprenant un élément de manoeuvre pourvu d'une partie avant munie d'un roulement formant butée du type apte à coopérer avec un diaphragme d'embrayage et d'une partie arrière du type apte à coopérer avec un organe de commande comprenant deux surfaces d'appui radialement espacées de part et d'autre d'un axe central de l'élément de manoeuvre, dans lequel, l'organe de commande ayant préalablement été disposé sur un organe de fixation par exemple sous la forme d'une rotule, et restant sensiblement immobile, on déplace l'élément de manoeuvre axialement vers l'arrière et angulairement autour de son axe central, de façon à provoquer le rapprochement sensiblement axial des surfaces d'appui de l'organe de commande et de deux surfaces radiales de commande de la partie arrière de l'élément de manoeuvre prévues pour être en contact avec lesdites deux surfaces d'appui de l'organe de commande, à travers deux échancrures d'une paroi radiale arrière s'étendant vers l'extérieur à partir d'une portion axiale s'étendant vers l'arrière au-delà des surface radiale de commande et radialement entre les surfaces radiales de commande, jusqu'à ce qu'un moyen d'encliquetage de la portion axiale interdise la désolidarisation axiale de l'élément de manoeuvre et de l'organe de commande.

On dispose dans un premier temps l'organe de commande sur un carter, de façon que la fixation de l'organe de commande sur le carter soit rendue plus aisée car elle ne doit pas être effectuée simultanément avec l'attelage de l'organe de commande sur l'élément de manoeuvre. On introduit ensuite l'élément de manoeuvre axialement dans une douille du carter, de façon à provoquer le rapprochement sensiblement axial des surfaces radiales d'appui de l'organe de commande et des surfaces radiales de commande de l'élément de manoeuvre, à travers deux échancrures symétriques de la paroi radiale arrière, jusqu'à ce qu'un moyen d'encliquetage de la portion axiale interdise un déplacement axial inverse.

On ne se soucie pas de l'orientation angulaire de l'élément de manoeuvre ou de sa bonne position axiale. Si l'élément de manoeuvre est mal orienté angulairement, les surfaces d'appui de l'organe de commande viendront en appui sur la surface radiale arrière de la portion radiale arrière. La rotation de l'élément de manoeuvre permet alors de placer les surfaces d'appui de l'organe de commande en regard des échancrures de la portion radiale arrière, pour le rapprochement axial des surfaces radiales de commande de l'élément de manoeuvre et des surfaces d'appui de l'organe de commande.

La présente invention et ses avantages seront mieux compris à l'étude de la description détaillée d'un mode de réalisation pris à titre d'exemple non limitatif et illustré par les dessins annexés, sur lesquels:
la figure 1 est une vue en coupe axiale d'un dispositif de butée de débrayage selon un aspect de l'invention;
la figure 2 est une vue de détail de la figure 1;
la figure 3 est une vue en perspective du dispositif de butée de débrayage;
la figure 4 est une autre vue en perspective du dispositif de butée de débrayage;
la figure 5 est une vue de face en élévation du dispositif de butée de débrayage lors de l'assemblage;
la figure 6 est une vue de face en élévation du dispositif de butée de débrayage lors d'une seconde étape de l'assemblage; et
la figure 7 est une vue de face en élévation du dispositif de butée de débrayage assemblé.

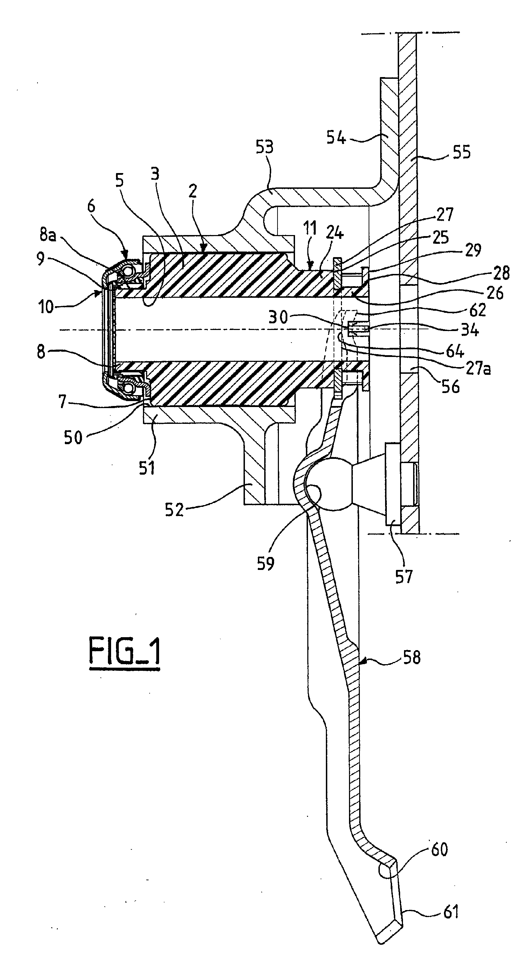

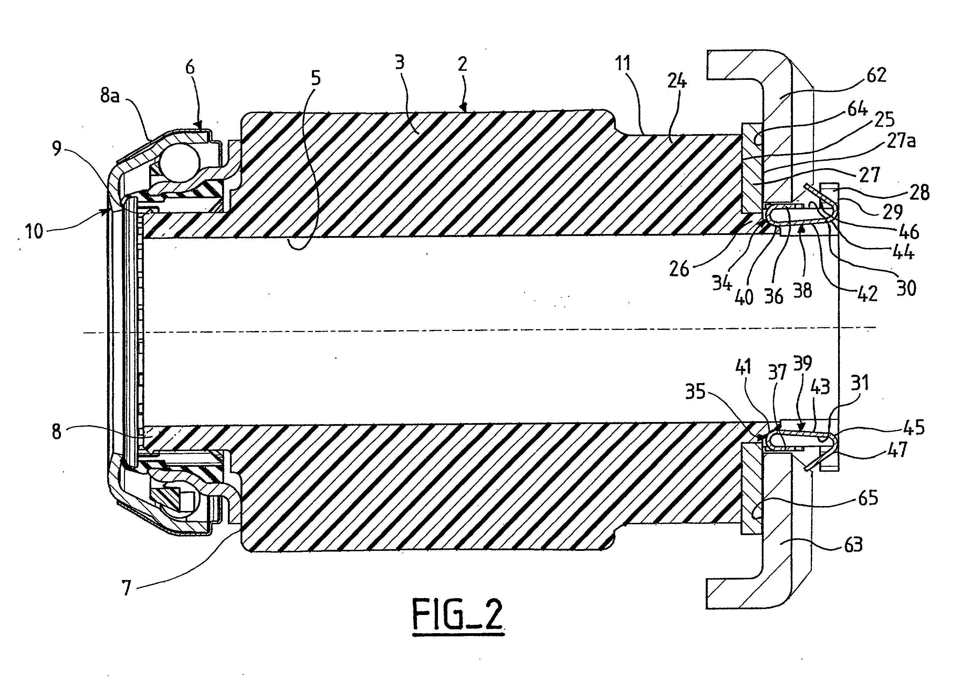

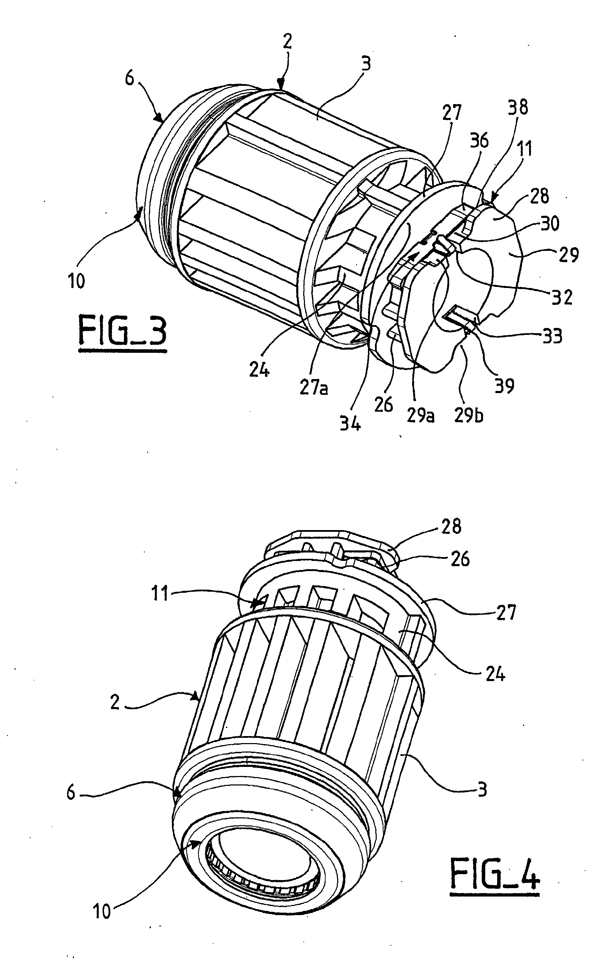

Sur les figures 1 à 4, un dispositif de butée de débrayage 1 comprend un élément de manoeuvre 2 sous la forme d'un corps tubulaire 3 pourvu d'un alésage 5, permettant le passage axial d'un arbre tournant, ici l'arbre d'entrée d'une boîte de vitesses d'un véhicule automobile.

L'élément de manoeuvre 2 comprend du côté d'une partie avant référencée 6 dans son ensemble, une surface radiale annulaire 7. Une portion annulaire 8 s'étend axialement du côté opposé au corps tubulaire 3, radialement entre la surface radiale 7 et l'alésage 5, et possède à son extrémité libre opposée au corps tubulaire 3 un bourrelet radial 9 de section axiale à profil triangulaire, en saillie radiale sur une surface extérieure cylindrique 8a de la portion annulaire 8. Un organe d'attaque référencé 10 dans son ensemble, comprenant un roulement formant butée, de préférence autocentreuse, dont une bague tournante est destinée à être en contact avec des moyens débrayeurs comme un diaphragme, est montée sur l'extrémité de la partie annulaire 8 opposée au corps tubulaire 3.

Du côté axialement opposé à la partie avant 6, le corps tubulaire 3 comprend une partie arrière 11 comprenant une portion tubulaire 24 de diamètre extérieur inférieur au diamètre extérieur du corps tubulaire 3 et prolongeant axialement le corps tubulaire 3 du côté opposé à la partie avant 6. La portion tubulaire 24 comprend, du côté axialement opposé au corps tubulaire 3, une surface radiale 25.

Une portion axiale 26 s'étend vers l'arrière à partir de la zone de moindre diamètre de la surface radiale 25 de la portion tubulaire 24. Une plaque d'appui annulaire 27 généralement métallique est disposée sur la portion axiale 26, et vient en contact sur la surface radiale 25 de la portion tubulaire 24. Avantageusement, la plaque d'appui 27 est solidarisée avec la partie arrière 11 de l'élément de manoeuvre 2 par surmoulage. La plaque d'appui 27 comprend du côté opposé à la surface radiale 25 deux surfaces radiales de commande 27a, 27b, radialement distantes, et prévues pour être en contact avec des surfaces d'appui d'un organe de commande. La portion axiale 26 s'étend au-delà des deux surfaces radiales de commande 27a, 27b et radialement entre lesdites deux surfaces radiales de commande 27a, 27b. Les surfaces radiales de commande 27a, 27b sont ici diamétralement opposées. La plaque d'appui 27 possède un diamètre extérieur supérieur au diamètre extérieur de la portion tubulaire 24, tout en étant inférieur au diamètre extérieur du corps tubulaire 3, pour permettre l'introduction axiale de l'élément de manoeuvre dans l'alésage d'une douille d'un carter, dont le diamètre est sensiblement égal au diamètre extérieur de l'enveloppe cylindrique du corps tubulaire 3.

Une portion radiale arrière 28 s'étend vers l'extérieur à partir de l'extrémité arrière de la portion axiale 26. La portion radiale 28 comprend du côté opposé au corps tubulaire 3 une surface radiale arrière 29. La portion radiale 28 est plus étendue radialement que la portion axiale 26, sauf axialement en regard des surfaces radiales de commande 27a, 27b, où la portion radiale 28 comprend deux échancrures respectivement 29a, 29b, symétriques par rapport à l'axe central de l'élément de manoeuvre 2. La portion radiale arrière 28 masque axialement la plaque d'appui 27, sans masquer les surfaces radiales de commande 27a, 27b.

La portion axiale 26 comprend deux surfaces axiales 30, 31 adjacentes aux surfaces radiales de commande 27a, 27b, symétriques par rapport à l'axe central de l'élément de manoeuvre 2, qui est l'axe de l'alésage 5 du corps tubulaire 3, et s'étendant axialement entre la portion tubulaire 24 et l'extrémité arrière de la portion axiale 26. Des ouvertures axiales 32 et 33 sont formées dans les surfaces axiales 30 et 31 de la portion axiale 26, entre les surfaces axiales 30, 31 et l'alésage 5 de l'élément de manoeuvre 2, pour former des logements destinés à recevoir des organes de retenue 34, 35.

Les organes de retenue 34, 35 comprennent des lames 36, 37 de forme générale plane fixées sur les surfaces axiales 30 et 31, lesdites lames 36, 37 agissant comme un organe anti-usure et servant également par leurs extrémités recourbées à la fixation des organes de retenue 34, 35 sur l'élément de manoeuvre 2. Des agrafes 38, 39 se raccordent sur les lames 36, 37, et possèdent des coudes 40, 41 se courbant à partir des lames 36, 37 radialement vers l'intérieur, dans les ouvertures axiales 32, 33, des portions axiales 42, 43 s'étendant axialement à partir des coudes 40, 41 du côté opposé à la portion tabulaire 24 et s'incurvant du côté opposé à la portion tubulaire 24, radialement vers l'extérieur en formant des coudes 44, 45, des languettes d'extrémité 46, 47 s'étendant radialement vers l'extérieur, et axialement vers les surfaces radiales de commande 27a, 27b de la plaque d'appui 27. Les agrafes 38, 39 s'étendent axialement entre les surfaces radiales de commande 27a, 27b de la plaque d'appui 27 et le plan radial contenant la surface radiale arrière 29 de la portion radiale 28.

Sur la figure 1, l'élément de manoeuvre est disposé dans l'alésage 50 d'une douille cylindrique 51 formée dans un carter 52 comprenant une portion axiale 53 s'étendant à partir d'une liaison avec la douille 51, une portion radiale 54 s'étendant à partir de l'extrémité de la portion axiale opposée à la douille 51, radialement vers l'extérieur. Le carter 52 est fixé sur un carter 55 d'une boîte de vitesse non représentée sur la figure, qui comprend un trou traversant axial 56 d'axe identique à l'alésage 5 du corps tubulaire 3 de l'élément de manoeuvre 2, permettant le passage axial de l'arbre d'entrée de la boîte de vitesses d'un véhicule automobile. Bien entendu, le carter 52 pourrait être monobloc avec le carter 55 de la boîte de vitesses.

Une rotule sphérique 57 est fixée sur le carter 55 de la boîte de vitesses, et constitue un point fixe de pivotement pour un organe de commande 58 comprenant une surface concave de pivotement 59 destinée à venir coiffer la rotule 57. Un logement de fixation 60, disposé sur une portion distante de la surface de pivotement 59, est pourvu d'une fente 61 permettant le passage d'un câble de commande non représenté dont l'extrémité vient coopérer avec le logement de fixation 60. L'organe de commande 58 comprend deux doigts 62, 63 du côté de la surface de pivotement 59 opposé au logement de fixation 60, radialement espacés, et comprenant des surfaces d'appui 64, 65 radialement espacées de part et d'autre de l'axe central de l'élément de manoeuvre 2, et venant en appui sur les surfaces radiales de commande 27a, 27b de la plaque d'appui 27, de chaque côté des surfaces axiales 30 et 31 de la portion axiale 26, axialement entre les surfaces radiales de commande 27a, 27b de la plaque d'appui 27 et des languettes 46 et 47 des agrafes 38, 39.

Lors du fonctionnement du dispositif de butée de débrayage, le mouvement axial de l'élément de manoeuvre 2 en direction de sa partie avant 6 amène l'organe d'attaque 10 en contact avec des moyens débrayeurs comme un diaphragme, de sorte que l'élément de manoeuvre 2 exerce une pression sur la zone de moindre diamètre du diaphragme d'embrayage, et déforme le diaphragme d'embrayage pour désolidariser des éléments de friction de l'embrayage. Le déplacement axial de l'élément de manoeuvre 2 est provoqué par un déplacement axial des surfaces d'appui 64, 65 de l'organe de commande 58, provoqué par exemple en tirant un câble possédant une extrémité logée dans le logement 60 et passant par la fente 61, de façon à provoquer la rotation de l'organe de commande 58 autour de la rotule 57 et le déplacement axial des surfaces d'appui 64, 65 des doigts 62, 63, en direction de la partie avant 6 de l'élément de manoeuvre 2. Les surfaces d'appui 64, 65 de l'organe de commande transmettent un effort axial aux surfaces radiales de commande 27a, 27b de la plaque d'appui 27. Les surfaces radiales de commande 27a, 27b de la plaque d'appui 27, prévues pour un contact permanent avec les surfaces d'appui 64, 65 de l'organe de commande 58, sont les surfaces fonctionnelles de l'élément de manoeuvre 2 coopérant avec l'organe de commande 58 lors du fonctionnement de la butée de débrayage.

Lors de cette opération, les surfaces d'appui 64, 65 possédant une trajectoire qui n'est pas strictement rectiligne, glissent légèrement sur les surfaces radiales de commande 27a et 27b de la plaque d'appui 27.

Les doigts 62, 63 sont montés avec un jeu radial faible avec les surfaces planes axiales des lames 36, 37 rapportées sur les surfaces axiales 30 et 31, de façon à empêcher la rotation de l'élément de manoeuvre 2 dans la douille 51 du carter 52.

Les surfaces axiales 36 et 37 rapportées sur la portion axiale 26 coopèrent avec les doigts 62, 63 de l'organe de commande pour solidariser angulairement l'élément de manoeuvre 2 et l'organe de commande, car la rotation du diaphragme d'embrayage tend à entraîner la rotation de !'élément de manoeuvre 2 autour de son axe central, du fait des frottements internes dans le roulement de l'organe d'attaque 10.

Les agrafes 38, 39 interdisent le déplacement axial des doigts 62, 63 de l'organe de commande 58 relativement à la portion axiale 26 de l'élément de manoeuvre 2, vers l'arrière de l'élément de manoeuvre 2, de façon que les doigts 62, 63 de l'organe de commande 58 ne se désolidarisent pas de l'élément de manoeuvre 2.

Lors de l'assemblage du dispositif de butée de débrayage 1, on introduit radialement les doigts 62, 63 de l'organe de commande dans le carter 52 et on vient coiffer la rotule 57 avec la surface de pivotement 59 de l'organe de commande 58. L'organe de commande 58 est ainsi monté correctement dans le dispositif de butée de débrayage 1, dans sa position de fonctionnement usuelle. On introduit alors axialement l'élément de manoeuvre 2 équipé de l'organe de butée 10 dans la douille 51 par l'extrémité de la douille 51 opposée à l'organe de commande 58, de façon à amener les surfaces d'appui 64, 65 des doigts 62, 63 de l'organe de commande 58 en contact avec les surfaces radiales de commande 27a, 27b de la partie arrière de l'élément de manoeuvre 2. Cependant, l'élément de manoeuvre 2 doit être orienté angulairement, de façon que les doigts 62, 63 de l'organe de commande 58 puissent venir de chaque côté des surfaces axiales 30, 31 de la portion axiale 26, et solidariser angulairement l'élément de manoeuvre 2 et l'organe de commande 58.

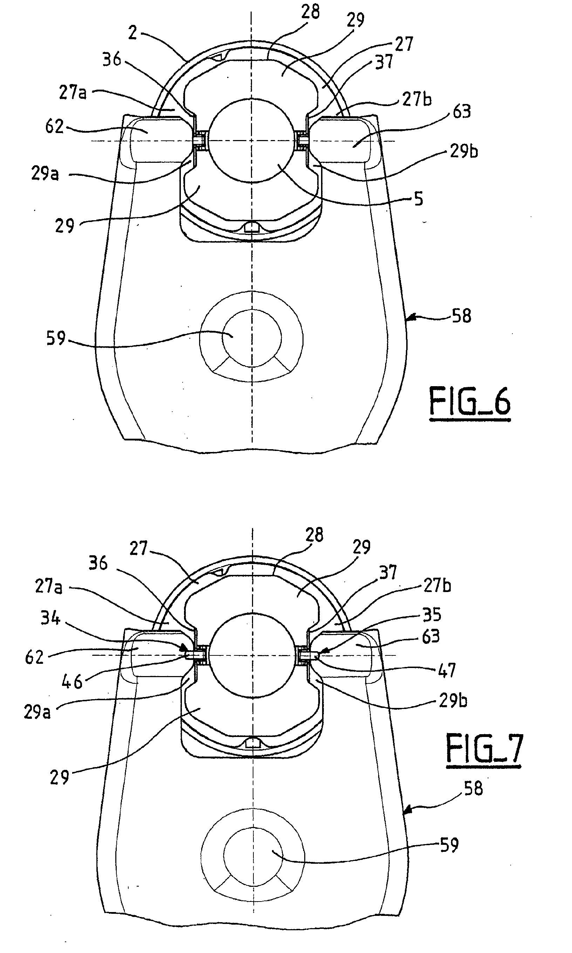

Si l'élément de manoeuvre 2 est correctement orienté angulairement par rapport à l'organe de commande 57, c'est-à-dire si les doigts 62, 63 se situent axialement en regard des échancrures 29a, 29b de la portion radiale 28, et donc en regard des surfaces radiales de commande 27a, 27b, les surfaces d'appui 64, 65 des doigts 62, 63 de l'organe de commande 58 se rapprochent axialement des surfaces radiales de commande 27a, 27b de la plaque d'appui 27, en passant à travers les échancrures 29a, 29b de la portion radiale 28 et en appuyant sur les languettes 46, 47 des agrafes 38 et 39, comme illustré plus particulièrement sur la figure 6, de façon à déformer élastiquement les agrafes 38, 39 qui s'effacent en s'enfonçant dans les ouvertures axiales 32, 33 et permettent le rapprochement axial des surfaces d'appui 64, 65 des doigts 62, 63 vers les surfaces radiales de commande 27a, 27b du plan d'appui 27.

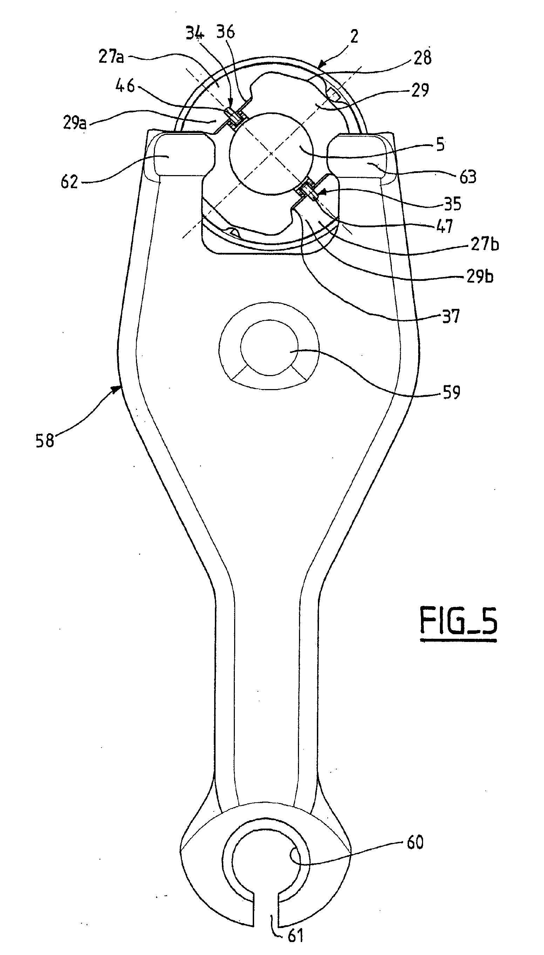

Si l'élément de manoeuvre 2 n'est pas orienté angulairement de façon correcte par rapport à l'organe de commande 58, comme sur la figure 5, les surfaces d'appui 64, 65 des doigts 62, 63 de l'organe de commande 58 viennent en contact sur la surface radiale arrière 29 de la portion radiale 28 qui s'étend radialement de façon à empêcher le déplacement axial des surfaces d'appui 64, 65 vers la partie arrière de l'élément de manoeuvre 2. Un mouvement angulaire de l'élément de manoeuvre 2 autour de son axe central permet de mettre les surfaces d'appui 64, 65 des doigts 62, 63 axialement en regard des échancrures 29a, 29b de la portion radiale 28, comme sur la figure 6, ce qui autorise alors le rapprochement axial, relativement à l'élément de manoeuvre 2, des surfaces d'appui 64, 65 des doigts 62, 63 vers les surfaces radiales de commande 27a, 27b de la plaque d'appui 27. La surface radiale arrière 29 de la portion radiale 28 est donc prévue pour un contact provisoire aves les surfaces d'appui 64, 65 de l'organe de commande 58.

Lorsque les surfaces d'appui 64, 65 des doigts 62, 63 sont venues en contact avec les surfaces radiales de commande 27a, 27b de la plaque d'appui 27, et comme illustré sur la figure 7, les agrafes 38, 39 reprennent leur position normale et interdisent le déplacement axial en sens inverse des surfaces d'appui 64, 65 des doigts 62, 63 de l'organe de commande 58, de façon à interdire une désolidarisation axiale de l'élément de manoeuvre 2 et de l'organe de commande 58 en assurant un contact permanent entre les surfaces radiales de commande 27a, 27b, et les surfaces d'appui 64, 65 de l'organe de commande 58.

En variante, les agrafes 38, 37 pourraient être monobloc avec la portion axiale 26, comme par exemple par des ergots aptes à se déformer élastiquement pour permettre le déplacement axial des doigts 62, 63 dans un sens.

On pourrait également envisager que les surfaces axiales des lames 36, 37, rapportées sur les surfaces axiales 30, 31, ne soit pas présentes, et que les doigts 62, 63 de l'organe de commande 58 coopèrent directement avec les surfaces axiales 30, 31 de la portion axiale 26.

Les agrafes 38, 39 sont situées axialement entre la portion tubulaire 24 et le plan défini par la surface radiale arrière 29, de façon qu'elles ne gênent pas la rotation de l'élément de manoeuvre 2 lorsque les surfaces d'appui 64, 65 des doigts 62, 63 sont en contact avec la surface radiale arrière 29.

Le dispositif de butée de débrayage associe donc un moyen d'interdiction de rapprochement axial, sur une première portion angulaire, des surfaces d'appui de l'organe de commande et des surfaces radiales de l'élément de manoeuvre, un moyen d'autorisation du rapprochement axial, sur une seconde portion angulaire, des surfaces d'appui de l'organe de commande et des surfaces radiales de l'élément de manoeuvre, et un moyen d'interdiction d'un déplacement axial inverse des surfaces d'appui de l'organe de commande relativement aux surfaces radiales de l'élément de manoeuvre.

Le dispositif de butée de débrayage permet donc de faciliter le montage en aveugle dudit dispositif. L'utilisation d'une surface radiale arrière sur laquelle les surfaces d'appui des doigts de l'organe de commande peuvent venir en appui provisoire lors de l'assemblage du dispositif de butée d'embrayage, et possédant des échancrures aptes à permettre le déplacement axial des surfaces d'appui des doigts en direction des surfaces d'appui de la plaque d'appui qui sont les surfaces fonctionnelles de la partie arrière de l'élément de manoeuvre, permet d'obtenir un moyen de positionnement angulaire de l'élément de manoeuvre vis-à-vis de l'organe de commande.

L'utilisation d'un moyen d'encliquetage permet le passage des doigts de l'organe de commande axialement dans un sens tout en interdisant le déplacement des doigts dans le sens inverse, de façon à solidariser axialement l'organe de commande et l'élément de manoeuvre.

## Revendications

1. Dispositif de butée de débrayage comprenant un élément de manoeuvre (2) pourvu d'une partie avant (6) munie d'un roulement formant butée (10) du type apte à coopérer avec un diaphragme d'embrayage, et d'une partie arrière du type apte à coopérer avec un organe de commande (58) comprenant deux surfaces d'appui (64, 65) radialement espacées de part et d'autre d'un axe central de l'élément de manoeuvre (2), la partie arrière de l'élément de manoeuvre (2) comprenant deux surfaces radiales de commande (27a, 27b) prévues pour être en contact avec lesdites deux surfaces d'appui (64, 65), et une portion axiale (26) s'étendant axialement à l'opposé de la partie avant au-delà desdites deux surfaces radiales de commande (27a, 27b) et radialement entre lesdites deux surfaces radiales de commande (27a, 27b), ladite portion axiale comprenant deux surfaces axiales (30, 31), symétriques par rapport à l'axe central et prévues pour coopérer avec l'organe de commande (58) en solidarisant angulairement l'élément de manoeuvre (2) et l'organe de commande (58), **caractérisé par le fait qu'**il comprend une portion radiale arrière (28) s'étendant vers l'extérieur à partir de l'extrémité arrière de la portion axiale (26), la portion radiale (28) présentant deux échancrures (29a, 29b) symétriques aptes à permettre le rapprochement axial des surfaces d'appui (64, 65) de l'organe de commande et des surfaces radiales de commande (27a, 27b) de l'élément de manoeuvre (2), la portion axiale (26) comprenant un moyen d'encliquetage apte à interdire un déplacement axial inverse.

2. Dispositif selon la revendication 1, **caractérisé par le fait que** les surfaces radiales de commande (27a, 27b) de contact de l'élément de manoeuvre (2) sont prévues pour un contact permanent entre l'organe de commande (58) et l'élément de manoeuvre (2), et la portion radiale arrière (28) étant prévue pour un contact provisoire avec les surfaces d'appui (64, 65) de l'organe de commande (58) lors de l'assemblage de l'organe de commande (58) avec l'élément de manoeuvre (2).

3. Dispositif selon l'une quelconque des revendications précédentes, **caractérisé par le fait que** le moyen d'encliquetage comprend un organe de retenue faisant saillie à partir de la surface axiale (30) de la portion axiale (26), radialement vers l'extérieur, axialement en direction des surfaces radiales de commande (27a, 27b).

4. Dispositif selon la revendication 3, **caractérisé par le fait que** l'organe de retenue est une agrafe (38, 39) fixée sur la portion axiale (26).

5. Dispositif selon l'une quelconque des revendications précédentes, **caractérisé par le fait que** le moyen d'encliquetage est monobloc avec la portion axiale (26).

6. Dispositif selon l'une quelconque des revendications précédentes, **caractérisé par le fait que** le moyen d'encliquetage se situe axialement entre les surfaces radiales de commande (27a, 27b) et une surface radiale arrière (29) de la portion radiale arrière (28).

7. Procédé d'assemblage d'une butée de débrayage, comprenant un élément de manoeuvre (2) pourvu d'une partie avant munie d'un roulement formant butée (10) du type apte à coopérer avec un diaphragme d'embrayage et d'une partie arrière du type apte à coopérer avec un organe de commande (58) comprenant deux surfaces d'appui (64, 65) radialement espacées de part et d'autre d'un axe central de l'élément de manoeuvre (2), dans lequel, l'organe de commande (58) restant sensiblement immobile, on déplace l'élément de manoeuvre (2) axialement vers l'arrière et angulairement autour de l'axe central, de façon à provoquer le rapprochement axial des surfaces d'appui (64, 65) de l'organe de commande (58) et de deux surfaces radiales de commande (27a, 27b) de l'élément de manoeuvre (2) prévues pour être en contact avec lesdites deux surfaces d'appui (64, 65) de l'organe de commande (58), à travers deux échancrures (29a, 29b) symétriques d'une paroi radiale arrière (28) s'étendant vers l'extérieur à partir d'une portion axiale (26) s'étendant vers l'arrière au-delà des surfaces radiales de commande (27a, 27b), et radialement entre les surfaces radiales de commande (27a, 27b), jusqu'à ce qu'un moyen d'encliquetage interdise la désolidarisation axiale de l'élément de manoeuvre (2) et de l'organe de commande (58).
